# EUROPEAN PATENT APPLICATION

(11) **EP 0 904 984 A1**
(43) Date of publication of application: **31.03.1999**
(21) Application number: 97307693.8
(22) Date of filing: 30.09.1997
(51) Int. Cl.: B60R 11/02

(54) **Device for supporting mobile phone in vehicle**

(71) Applicant: Nika Foria Inc., Kuanhsi, Hsinchu (TW)
(72) Inventor: Chen, Henry, Kuanhsi, Hsinchu (TW)
(74) Representative: Brown, Michael Stanley

(57) **Abstract**

A device for securing a mobile phone (80) to a vehicle includes a frame (10) having a plate (12), and a base (20) secured to the plate (12) for supporting the mobile phone (80). The frame (10) includes a panel (16) for engaging with a hook (31) which may engage with the vehicle for securing the frame (10) and the mobile phone (80) to the vehicle. The frame (10) has a pad (19) secured to the panel (16) for cushioning the mobile phone (80). The frame (10) has one or more legs (18) for engaging with the vehicle and for preventing the frame (10) from rotating relative to the vehicle.

## Description

The invention relates to a device supporting a mobile phone in a vehicle.

Typical mobile phone supporting devices include a huge volume and are disposed beside the driver seat such that the mobile phone may not be easily fetched by the driver.

The invention is to provide a device for supporting a mobile phone in a vehicle and for allowing the mobile phone to be easily fetched.
FIG. 1 is an exploded view of a mobile phone supporting device;
FIG. 2 is a perspective view of the frame; and
FIG. 3 is a perspective view showing the mounting of the mobile phone supporting device to the vehicle.

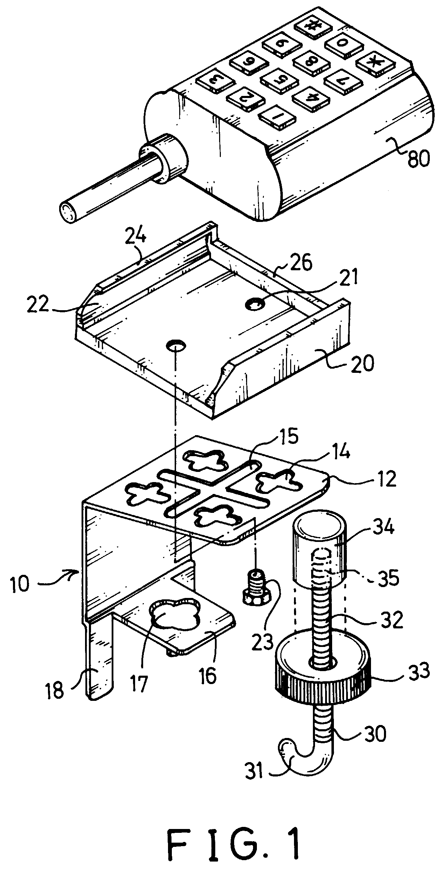

Referring to FIG. 1, a mobile phone supporting device comprises a frame 10 including a plate 12 having a number of openings 14, 15 for engaging with fasteners 23 which may engage through the holes 21 of a base 20 for securing the base 20 to the plate 12. The openings 14, 15 include a "+" shape. The base 20 includes a pair of channels 22 for engaging with the mobile phone 80, or includes a pair of flanges 24 for retaining the mobile phone 80 in place. The base 20 includes an end wall 26 for engaging with the mobile phone 80 and for retaining the mobile phone 80 in place. The frame 10 includes a panel 16 extended from the frame and parallel to the plate 12. The panel 16 includes an orifice 17 for engaging with a hook 31 of a rod 30. The frame 10 includes one or more legs 18. The rod 30 includes an outer thread 32 for engaging with an inner thread 35 of a nut or knob 34 and for securing the frame 10 to the vehicle. The orifice 17 includes a size large enough for allowing the hook 31 to be engaged through the orifice 17. A gasket or a disc 33 may be engaged with the panel 16 for engaging with the knob 34 and for preventing the knob 34 from engaging through the orifice 17 or from damaging the panel 16. The disc 33 may also includes an inner thread for engaging with the outer thread 32 of the rod 30.

The vehicle normally includes a number of air conditioning outlets 90 each having a number of blades 92 and a number of gaps 94 formed between the blades 92. The legs 18 of the frame 10 may engage into the gaps 94 for preventing the frame 10 from rotating relative to the blades 92. The hook 31 is engaged through the orifice 17 of the panel 16 and hooked with either of the blades 92. The knob 34 is then threaded to the rod 30 for securing the frame 10 to the vehicle. The frame 10 and the mobile phone 80 may thus be easily secured to the control panel of the vehicle and located in front of the user such that the user may easily fetch the mobile phone. The frame 10 may also be secured to the other place of the vehicle by the hook 31. One or more bases 20 may be provided for supporting various kinds of mobile phones 80 and for securing the mobile phones 80 to the frame 10.

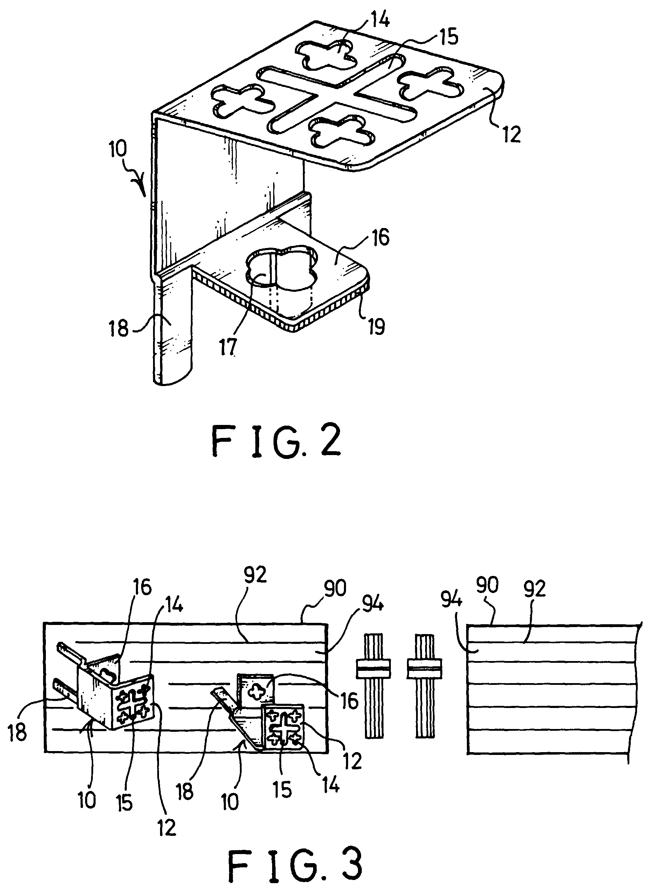

Referring next to FIG. 2, a pad 19 may be secured to the panel 16 for engaging with the vehicle and for preventing the panel 16 from damaging the vehicle. The pad 19 may also be used for absorbing the shocks and vibrations that may be transmitted to the frame 10 and the mobile phone 80.

## Claims

1. A mobile phone supporting device for securing a mobile phone (80) to a vehicle comprising a frame (10), characterized in that:
the frame (10) includes a plate (12), means (16, 30, 31) for securing the frame (10) to the vehicle, a base (20) for supporting the mobile phone (80), and means (23) for securing the base (20) to the plate (12) of the frame (10).

2. The supporting device as claimed in claim 1, wherein the frame (10) includes at least one leg (18) for engaging with the vehicle.

3. The supporting device as claimed in claim 1, wherein the base (20) includes a pair of channels (22) for engaging with the mobile phone (80).

4. The supporting device as claimed in claim 1, wherein the base (20) includes a pair of flanges (24) for engaging with the mobile phone (80).

5. The supporting device as claimed in claim 1, wherein the securing means (16, 30, 31) for securing the frame (10) to the vehicle includes a panel (16) extended from the frame (10) and having an orifice (17), a rod (30) having a hook (31) for engaging through the orifice (17) and having an outer thread (32), and a nut (34) threadedly engaged with the outer thread (32) of the rod (30) for securing the panel (16) and the frame (10) to the vehicle.

6. The supporting device as claimed in claim 5, wherein the frame (10) includes a pad (19) secured to the panel (16) for engaging with the vehicle.

7. The supporting device as claimed in claim 5, wherein the securing means (16, 30, 31) for securing the frame (10) to the vehicle includes a disc (33) engaged on the rod (30) and engaged between the nut (34) and the panel (16).
